# DEMANDE DE BREVET EUROPEEN

(11) **EP 1 406 060 A1**
(43) Date de publication de la demande: **07.04.2004**
(21) Numéro de dépôt: 03292441.7
(22) Date de dépôt: 03.10.2003
(51) Int. Cl.: G01B 11/02, G01B 11/06, G01B 11/24, G01N 21/89, B60J 10/00, B05C 5/02

(54) **Procédé et appareil de contrôle d'un boudin d'extrusion, tel qu'un boudin de colle, et dispositif d'encollage**

(30) Priorité: 03.10.2002 FR 0212216
(71) Demandeur: Visio Nerf, 49340 Nuaille (FR)
(72) Inventeur: Robert, Pierre, 49300 Cholet (FR)
(74) Mandataire: Thibon-Littaye, Annick

(57) **Abrégé**

L'invention concerne un procédé de contrôle d'un boudin d'extrusion (6) déposé sur un support (7) suivant une trajectoire déterminée, suivant lequel on relève une image du profil du boudin (6) en chaque point de la trajectoire et pour chacune des images ainsi relevées, on détermine les valeurs de la hauteur et de la surface du boudin (6) en section transversale. Pour ces deux grandeurs, on vérifie que les valeurs trouvées se situent à l'intérieur de fourchettes prédéterminées propres à chacune. L'invention concerne également un dispositif d'encollage par extrusion formé d'une tête d'encollage comportant une buse d'extrusion (1 ), associée à un dispositif de contrôle automatique de la qualité d'encollage au fur et à mesure du dépôt du boudin (6), qui comporte des moyens pour la mise en oeuvre du procédé de contrôle du boudin extrudé (6) suivant l'invention.

## Description

L'invention concerne la réalisation de boudins d'extrusion, en s'intéressant plus particulièrement aux applications qui touchent aux techniques d'encollage où le boudin est considéré être un joint de colle appliqué par extrusion sur un support à encoller. Elle vise essentiellement à permettre un contrôle automatique du boudin au cours de l'encollage. On utilise ici le terme "contrôle" dans le sens d'un examen du boudin en vue d'en tirer un diagnostic de qualité.

L'objectif majeur de ce contrôle réalisé suivant l'invention est de déterminer le degré de qualité de l'encollage d'une surface encollée par rapport à des normes de conformité préétablies, avant de procéder à la fixation de cette surface par collage sur une autre surface. En repérant les éventuelles imperfections sur le boudin extrudé, on peut ainsi éviter d'effectuer un collage qui serait défectueux.

On se place ici, pour exposer le principe de l'invention, dans l'exemple de la réalisation de joints de colle sur un support ("substrate" en anglais). L'invention s'applique avec avantage à un joint de colle réalisé par extrusion. Par extrusion, on entend ici que la matière est poussée sous pression à travers une buse à sortie latérale qui la dépose sur le support, ce qui fait que le joint est écrasé sur la surface du support receveur.

L'invention s'applique également à tous les autres types de boudins d'extrusion, tels que ceux qui se situent hors du domaine de l'encollage proprement dit, par exemple tels que les profilés en polymères organiques (matières plastiques).

L'invention n'exclut cependant pas les situations où l'on réalise un boudin véritablement cylindrique, tel qu'il peut en être créé par exemple, pour une matière collante, à travers un tube à sortie axiale dirigé verticalement sur une surface à encoller disposée horizontalement, et pour lequel, contrairement aux boudins réalisés par extrusion au moyen d'une buse à sortie latérale, le joint n'est pas écrasé sur le support.

Dans le contexte préféré de la réalisation d'un joint de colle par extrusion, l'invention a pour objet non seulement un procédé de contrôle du joint, et un dispositif pour la mise en oeuvre de ce procédé comportant des moyens spécifiques à l'invention, mais aussi un dispositif d'encollage dans lequel les moyens spécifiques à l'invention sont combinés avec des moyens classiques qui assurent le dépôt d'un joint de colle le long d'une trajectoire déterminée. L'invention est particulièrement appropriée au contrôle de la qualité de l'encollage dans les chaînes de montage en série automatisées. La trajectoire d'encollage est ainsi par exemple celle d'un robot suivant le contour d'une vitre pour y former un joint de colle par lequel cette vitre doit ensuite être fixée de manière étanche sur un cadre récepteur.

Dans l'assemblage d'une pièce encollée sur une pièce réceptrice tel qu'il est réalisé dans les chaînes de montage, la moindre lacune dans le joint de colle fait courir le risque d'un défaut d'étanchéité. Si l'on considère comme exemple le cas du montage des pare-brise sur les caisses d'automobiles dans une chaîne de fabrication automatisée, on comprend sans peine qu'il est souhaitable de prévenir ce risque en détectant les lacunes ou autres anomalies du joint sur le boudin de colle non encore durcie, soit lors de l'encollage, soit juste après, en tout cas avant la mise en place du pare-brise sur la caisse correspondante pour collage. On est alors à temps pour signaler l'existence d'un défaut du joint à un opérateur qui écartera le pare-brise mal encollé de la chaîne d'assemblage, ou qui commandera la tête d'encollage pour effectuer un encollage supplémentaire des parties sur lesquelles le boudin est défectueux.

En ce sens, le problème que vise à résoudre l'invention en s'intéressant spécifiquement au contrôle des boudins d'extrusion du type des boudins de colle, avec les spécificités techniques qui sont associées à leur dépôt, diffère totalement des problèmes pouvant être rencontrés dans le domaine du dépôt de cordons de soudure.

En effet, un cordon de soudure est déposé de façon classique entre deux surfaces biseautées à assembler, sous forme d'une matière en fusion qui est fluide, sans grande consistance, et qui va se solidifier rapidement et fixer ainsi définitivement les deux surfaces l'une à l'autre. La fixation s'effectue de ce fait quasiment au fur et à mesure du dépôt du cordon. L'une des exigences majeures du dépôt d'un cordon de soudure est en outre d'assurer que d'une part le cordon remplisse entièrement la cavité ménagée entre les deux surfaces biseautées, et que d'autre part il déborde le moins possible de cette cavité. On comprend alors l'importance dans ce contexte, pour assurer que la fixation des pièces l'une à l'autre réponde à des conditions de solidité requises, de détecter des défauts du cordon (qui sont dus à des dérives en cours de dépôt des paramètres de dépôt, que sont par exemple la vitesse d'avancement de la torche ou la pression de dépôt), dès qu'ils apparaissent, afin de jouer immédiatement sur les paramètres en cause et de rétablir la conformité du cordon en cours de dépôt.

Au contraire, l'invention s'intéresse au contrôle des boudins d'extrusion qui sont déposés sur une surface plane. La matière de base du boudin est visqueuse, si bien que le boudin déposé reste consistant sur la surface et qu'il y constitue une forme volumique. Il conserve sa capacité de collage ainsi que sa forme sur la pièce encollée. Une fois son encollage terminé, la surface est appliquée contre une autre surface avec laquelle elle doit être solidarisée. Il est alors avantageux de pouvoir évaluer la qualité de l'encollage avant de réaliser l'étape de collage proprement dite, afin d'éviter de gaspiller des pièces dans des tentatives de collage vouées à l'échec à cause de défauts du boudin.

Dans le cas de l'encollage d'une surface, le boudin de colle qui est déposé par extrusion est susceptible de présenter des défauts qui sont inhérents à la technique de dépôt et à la matière spécifique constituant le boudin, et qui ne se retrouvent en particulier pas dans le cas des cordons de soudure. On peut citer principalement la présence de bulles d'air, qui sont occasionnellement créées par une interruption momentanée du flux de colle en sortie de la buse d'extrusion. Ces bulles d'air ne sont jamais complètement incluses dans le boudin. Elles explosent au moment du dépôt du boudin sur le support, et il en résulte un changement ponctuel de la forme du boudin, dans lequel il manque à cet endroit une certaine quantité de matière. Les bulles peuvent se former sur la surface supérieure du boudin, et dans ce cas on observe un creux sur cette surface, ou bien elles peuvent être ensevelies sous un filet de matière. On ne remarque alors quasiment aucune modification de la surface supérieure du boudin lorsqu'on l'observe par le dessus.

De telles bulles, qui présentent toujours une taille relativement importante, du fait de la viscosité élevée de la matière extrudée, engendrent des défauts sur le boudin qui entraînent une mauvaise qualité de l'encollage. Suivant les normes industrielles de qualité d'encollage de pièces, la présence d'un seul défaut suffit pour que l'ensemble de l'encollage d'une pièce entière soit considéré défectueux.

Il est donc important que la présence éventuelle de bulles puisse être détectée au cours de l'encollage, afin de pouvoir réagir à cette présence et mener à bien les actions nécessaires pour assurer que tous les collages réalisés soient solides.

Conformément à l'invention, on relève une image du profil du boudin en chaque point de la trajectoire et à partir des informations de ces relevés, pour chacune de ces images, on détermine les valeurs non seulement de la hauteur du boudin, définie par la distance entre le support encollé et le point du boudin qui en est le plus éloigné, comme il est déjà fait par d'autres techniques de l'art antérieur (fût-ce seulement par observation visuelle par un opérateur humain), mais aussi de sa surface en section transversale. Cette surface est enveloppée par le profil du boudin. Pour ces deux grandeurs, on vérifie que les valeurs trouvées se situent à l'intérieur de fourchettes prédéterminées propres à chacune, et dans le cas où au moins l'une des deux valeurs ne se situe pas à l'intérieur de la fourchette correspondante, on affecte à l'opération de dépôt du boudin l'attribut défectueux.

Ceci permet avantageusement de détecter la présence de bulles même lorsque celles-ci sont enfouies sous un filet de colle. En effet, si la hauteur du boudin ne varie pratiquement pas à cet endroit, et reste donc à l'intérieur de sa fourchette de tolérance prédéterminée, on détecte cependant une variation importante de la valeur mesurée de la surface en section transversale du boudin, qui sort de la fourchette correspondante. On établit alors un diagnostic de non conformité du boudin. En exploitant à la fois les données de hauteur et de surface en section transversale du boudin, on s'assure ainsi de détecter la présence de toute bulle qui se révélerait gênante pour le collage subséquent du support encollé.

Le fait que le relevé du profil du boudin s'effectue par imagerie, sans contact, est particulièrement avantageux dans le cas d'un joint de colle. Cependant, tout autre dispositif utilisant des moyens analogues pour le contrôle de tous types de boudins d'extrusion entre également dans le cadre de l'invention.

De plus, si l'exemple préféré d'application de l'invention est l'encollage de pare-brise, l'invention s'applique également à tout autre support qui accepte les systèmes de détection optique. On peut citer comme exemples l'encollage de pédaliers, le masticage de panneaux de portes...

Suivant des caractéristiques avantageuses de l'invention, on relève une image du profil du boudin en éclairant ce dernier par un faisceau lumineux suivant un plan d'éclairage qui lui est transversal, et en observant la trace de ce faisceau sur le boudin suivant un plan également transversal au boudin, incliné par rapport au plan d'éclairage. La trace formée par le faisceau lumineux sur le boudin résulte de l'intersection entre le plan d'incidence du faisceau lumineux et le plan du profil du boudin.

De cette manière, on est assuré de disposer, dans une image en plan unique, de toutes les données d'images nécessaires (en termes de pixels répartis sur le profil) pour savoir en déduire, par des calculs en eux-mêmes classiques, des valeurs caractérisant d'une part la hauteur du boudin au-dessus de la surface de dépôt, d'autre part la surface en section transversale de ce boudin au même endroit.

Le matériel utilisé suivant l'invention est en lui-même classique en ce qu'il implique une tête optique comportant des moyens pour projeter un faisceau lumineux vers le boudin, suivant un plan d'éclairage transversal au boudin, et des moyens optiques pour observer la trace formée par le faisceau lumineux sur le boudin, suivant un plan de vue également transversal au boudin incliné par rapport au plan d'éclairage, et pour relever le profil du boudin.

Suivant une caractéristique avantageuse de l'invention, la source de lumière et les moyens optiques sont inclus dans un même boîtier compact, ce qui facilite la manipulation de la tête optique, et notamment son installation au sein de la chaîne de montage.

La tête optique est associée à des moyens de traitement d'image pour calculer à partir du profil du boudin ainsi relevé les valeurs de sa hauteur et de sa surface en section transversale en chaque point de la trajectoire de dépôt, et pour comparer ces valeurs calculées aux fourchettes de valeurs prédéterminées propres à chacune, et, si au moins une des valeurs ne se situe pas à l'intérieur de la fourchette correspondante, pour affecter à l'opération de dépôt l'attribut défectueux.

La tête optique comporte notamment, pour l'exemple préféré de réalisation, un dispositif d'éclairage par faisceau laser étalé en un faisceau lamellaire dans un plan d'incidence définissant un tracé d'éclairement sur le joint, et une caméra sensible dans la même gamme de longueurs d'onde.

L'invention concerne également un dispositif d'encollage d'un support par dépôt d'un boudin de colle extrudé sur ce support suivant une trajectoire d'encollage déterminée. Ce dispositif est formé d'une tête d'encollage comportant une buse d'extrusion, associée à un dispositif de contrôle automatique de la qualité d'encollage au fur et à mesure du dépôt du boudin, d'après la hauteur et la surface en section transversale du boudin. Le dispositif de contrôle de la qualité d'encollage comporte avantageusement des moyens pour la mise en oeuvre du procédé de contrôle d'un boudin d'extrusion selon l'invention, tels qu'ils ont été décrits précédemment.

Suivant des caractéristiques avantageuses de l'invention, la tête optique pour le relevé de l'image du profil du boudin est montée sur le même support que la buse d'extrusion, juste en aval par rapport à celle-ci, afin de permettre l'observation du boudin extrudé dans les meilleures conditions. La buse d'extrusion et la tête optique sont en outre assemblées de manière à être solidaires dans leurs mouvements.

Par ailleurs, l'invention permet de façon tout à fait avantageuse de s'adapter aux cas plus que fréquents où la trajectoire de la buse n'est pas uniquement rectiligne, mais qu'elle présente au contraire des portions courbes voire anguleuses.

Ainsi, dans des modes de mise en oeuvre préférés de l'invention, la tête optique est positionnée de façon à observer le boudin dans un plan transversal à ce dernier, suivant un axe de vue dirigé en biais vers l'axe de la trajectoire d'encollage. Ce dernier est assimilable au résultat tel qu'il se traduit sur le support, c'est-à-dire au tracé du joint sur le support. Dans tous les cas, même dans les zones de la trajectoire qui ne sont pas rectilignes, à chaque instant donné du déplacement de la buse il peut être défini une droite tangente à la trajectoire qui constitue un axe local pour celle-ci.

On s'assure ainsi avantageusement d'observer le boudin toujours par le même côté, quelle que soit la forme prise par la trajectoire, et ses variations de courbure. Dans ces conditions, on capte l'image d'un seul versant du boudin, le même tout le long de la trajectoire d'encollage. Les calculs de traitement de l'image sont de ce fait simplifiés. Les fourchettes de référence pour la valeur de sa surface en section transversale sont alors adaptées en fonction de cette disposition matérielle.

Dans des modes de mise en oeuvre préférés de l'invention, en chaque point observé du boudin, l'axe de vue de la tête optique forme notamment un angle compris entre 5 et 30 degrés avec l'axe de la trajectoire d'encollage.

Dans les zones courbes de la trajectoire d'encollage, l'inclinaison de l'axe de vue de la caméra par rapport à l'axe de la trajectoire varie, et ce d'autant plus que le virage est serré. Le profil du boudin perçu par la caméra varie alors en conséquence, cette variation étant répétée d'une trajectoire à l'autre. Suivant une caractéristique avantageuse de l'invention, on observe le boudin à une distance de l'orifice de sortie de la buse la plus courte possible, de manière à limiter l'impact, sur l'image perçue du boudin, des courbures de la trajectoire d'encollage. En effet, la variation de perception dans les virages est alors moins importante.

De plus, de façon tout à fait avantageuse, les gammes de tolérance qu'expriment les fourchettes de référence pour les valeurs de la hauteur et de la section du boudin ne sont pas nécessairement constantes tout au long du tracé du joint de colle : ces fourchettes sont au contraire variables en fonction des variations de courbure de la trajectoire.

En outre, si l'on admet que le profil du joint extrudé est normalement uniforme, l'invention prévoit de tenir compte des variations admissibles qu'il peut néanmoins subir quand l'ensemble comprenant la buse d'extrusion du joint de colle et la tête optique doit suivre une trajectoire à courbe serrée, dans laquelle il arrive que le versant du boudin extérieur au virage soit plus alimenté que son versant intérieur. Les fourchettes de référence sont alors adaptées en conséquence, et elles sont différentes dans ces zones courbes que dans les portions en ligne droite. Cette variation concerne plus spécifiquement la surface en section transversale du boudin, la valeur de sa hauteur étant quant à elle quasiment constante.

Les fourchettes de tolérance sont calculées par rapport à des valeurs nominales qui sont choisies pour représenter un boudin sans aucun défaut. Dans des modes de réalisation préférés de l'invention, la fourchette de valeurs concernant la hauteur du boudin varie entre plus ou moins 10 à 30 % par rapport à la valeur nominale. Le boudin est également considéré défectueux si sa surface en section transversale est inférieure de 30 à 60 % à la valeur nominale.

Selon une caractéristique avantageuse de l'invention, lorsque pour un point de la trajectoire les valeurs de la hauteur et/ou de la surface en section transversale ne sont pas incluses dans les fourchettes de référence prédéterminées, ce qui témoigne de la présence d'un défaut sur le joint extrudé qui pourrait être pénalisant pour la suite des opérations d'assemblage, l'affectation de l'attribut défectueux à l'opération de dépôt entraîne l'émission d'un signal d'information.

Suivant une première forme de mise en oeuvre de l'invention, ce signal détermine automatiquement le déclenchement d'un moyen d'avertissement visuel et/ou sonore qui attire l'attention d'un opérateur pour supprimer la pièce dont l'encollage est défectueux. Il est toutefois à prévoir que l'opérateur puisse aussi rectifier le joint de colle. Et pour cela, on prévoit en particulier une visualisation de l'endroit où le défaut est apparu.

Selon une caractéristique de l'invention particulièrement avantageuse pour un fonctionnement automatisé pour l'encollage de pièces, le dispositif d'encollage est embarqué sur un robot d'encollage de pièces à système de commande automatique. Dans ce contexte, l'invention prévoit que le dispositif d'encollage comporte des moyens pour communiquer avec ce système. Dans des modes de mise en oeuvre préférés de l'invention, le signal d'information émis lorsqu'un défaut du boudin est détecté sur une pièce détermine automatiquement la transmission, au système de commande du robot, d'un signal de commande d'une opération automatique associée à l'attribut défectueux affecté à l'opération de dépôt. Ce signal peut notamment soit commander d'interrompre l'encollage et d'éliminer la pièce mal encollée, soit de réaliser un nouvel encollage des parties du boudin pour lesquelles au moins une des valeurs calculées n'est pas incluse dans la fourchette de référence correspondante.

En outre, suivant un procédé d'encollage de pièces en série utilisant les moyens spécifiques à l'invention, on détermine des paramètres de fonctionnement répétitif d'après les résultats de mesures effectuées sur des pièces échantillons d'après le procédé de contrôle d'un boudin d'extrusion selon l'invention.

Dans des formes de mise en oeuvre particulièrement avantageuses de l'invention, on prévoit que la buse d'encollage repasse systématiquement sur sa zone de départ, pour laquelle il est courant que le boudin déposé soit imparfait. A cet effet, le dispositif d'encollage suivant l'invention comporte avantageusement des moyens pour commander, lorsque la trajectoire présente une forme de boucle fermée, la réalisation systématique d'un nouvel encollage de la zone de départ de la trajectoire sur une longueur, déterminée suivant le procédé de contrôle selon l'invention, pour laquelle la hauteur et/ou la surface en section transversale du boudin ne se situent pas à l'intérieur des fourchettes de référence prédéterminées.

L'invention sera maintenant plus complètement décrite dans le cadre de caractéristiques préférées et de leurs avantages, en faisant référence aux figures 1 à 4 dans lesquelles :
- la figure 1 illustre une vue latérale d'une buse d'extrusion et d'une tête optique, les composants internes de celle-ci étant représentés ;
- la figure 2 représente la même buse d'extrusion et la même tête optique en vue de dessus ;
- les figures 3a et 3b montrent un boudin d'extrusion en coupe transversale, dans une portion de trajectoire en ligne droite pour la figure 3a et en ligne courbe pour la figure 3b ;
- et les figures 4a, 4b et 4c montrent un boudin d'extrusion défectueux, avec une interruption franche et en coupe longitudinale pour la figure 4a, avec une bulle cachée et en coupe longitudinale pour la figure 4b, et la même bulle cachée en coupe transversale pour la figure 4c.

Le dispositif d'encollage suivant l'invention est essentiellement constitué d'une tête d'encollage. La tête d'encollage est montée sur un pied sur lequel est fixé un réservoir de colle incluant en pratique les organes nécessaires à la préparation de la colle, et au sommet duquel est assemblée une buse d'extrusion 1. Celle-ci est dirigée verticalement lorsque le dispositif d'encollage est placé en appui sur son pied dans sa position normale d'utilisation. Une tête optique 2 pour le contrôle du boudin au fur et à mesure de sa formation est montée sur le pied près de la buse d'extrusion 1, en une position légèrement décalée par rapport à celle-ci. La tête optique 2 et la buse 1 sont solidaires dans leurs déplacements sur le pied fixe. La tête optique est associée à un enrouleur de câble qui lui permet des mouvements par rapport à un boîtier de commande fixe qui contient des moyens d'acquisition et de traitement d'image auxquels elle est reliée. Pour des raisons de clarté, ces différents éléments ne sont pas représentés sur les figures. L'ensemble de ces moyens et de la tête optique 2 forme un dispositif de contrôle optique. La tête optique 2 est avantageusement conçue de telle sorte qu'elle s'adapte à toutes les têtes existantes d'encollage par extrusion.

Le dispositif d'encollage tel que décrit ici est tout à fait adapté pour une utilisation dans les chaînes de montage en série automatisées. Pour cela, il peut être embarqué sur un robot dirigé par un système de commande automatique et qui se déplace le long d'une trajectoire d'encollage déterminée. Le système de commande du robot contrôle également avantageusement la tête d'encollage, notamment son débit et la pression appliquée pour l'extrusion de la colle.

On se place ici, pour la description du mode de réalisation préféré, dans le cas de l'encollage de pare-brise destinés à être fixés par collage sur un véhicule automobile dans une chaîne de montage automatisée. L'encollage des pare-brise est réalisé suivant une trajectoire formant une boucle fermée, qui suit le contour du pare-brise. La trajectoire d'encollage présente ainsi des parties rectilignes et des parties courbes.

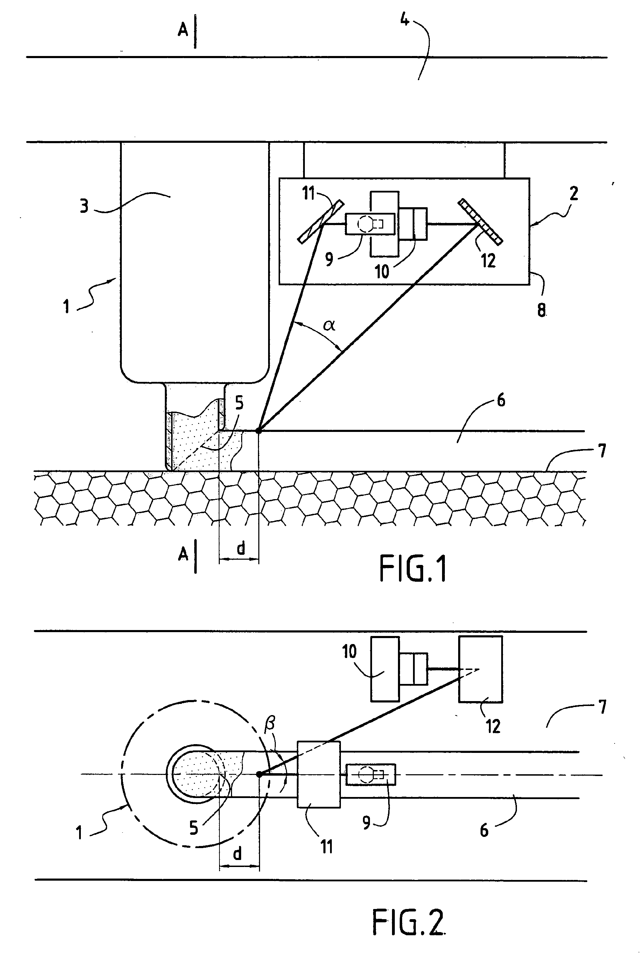

L'encollage est réalisé au moyen de la buse d'extrusion 1, dont un exemple de réalisation est illustré de façon plus détaillée, en vue latérale, sur la figure 1. Cette buse 1 est essentiellement constituée d'un corps cylindrique 3 relié à un canal d'arrivée de colle 4. Elle comporte un orifice latéral 5, par lequel est déposé, sous pression, en arrière de la buse 1 par rapport à son sens de déplacement, un boudin de colle 6 sur un support receveur 7. Le dépôt est réalisé à proximité immédiate, de l'ordre de quelques millimètres, de la surface à encoller. Le boudin 6 est alors écrasé sur le support, et il prend une forme symétrique assimilable à celle d'un triangle à flancs raides (forme semi-ovoïde).

Dans l'exemple de réalisation préféré représenté sur la figure, la buse 2 est perpendiculaire au support encollé 7. Ce n'est cependant pas obligatoirement le cas.

Dans des modes de réalisation préférés de l'invention, afin de s'assurer que le cordon de colle soit le plus régulier possible dans les zones courbes de la trajectoire d'encollage, la buse 1 présente un axe de mobilité A-A, qui est un axe de symétrie longitudinal pour son corps 3, et qui lui permet de pivoter sur elle-même dans les virages. L'orifice latéral 5 est alors toujours dirigé dans la même direction par rapport à l'axe local de la trajectoire. La tête optique 2 est solidaire de la buse 1 dans ces mouvements de rotation.

Au fur et à mesure du dépôt du boudin 6 sur le support 7, on réalise un contrôle de son profil, qui est un témoin de la qualité de l'encollage. L'objectif principal est de détecter tout incident qui engendrerait un défaut du boudin et qui serait alors la cause d'un collage défectueux. Un tel incident peut être dû à un défaut d'adhérence de la colle sur le support, par exemple à cause d'une variation de la pression exercée sur la colle pour son extrusion. On assiste alors, au moment du dépôt, à la formation d'une bulle d'air dans le cordon de colle, à la surface du support receveur.

Une autre cause d'incident peut être l'irrégularité du boudin extrudé dans les virages. Il est à noter que la vitesse de déplacement du robot n'est pas nécessairement constante sur l'ensemble de la trajectoire, puisque par un phénomène d'inertie, il arrive fréquemment que le robot ralentisse dans les virages. Alors, le débit de colle est, de façon classique, automatiquement modifié afin que le cordon de colle reste régulier. Cependant, il peut arriver qu'une mauvaise adéquation entre le débit de colle et la vitesse du robot engendre des défauts du cordon, et plus particulièrement dans les portions courbes.

Le contrôle de la qualité du boudin fait intervenir la tête optique 2, qui est située légèrement en arrière de la buse d'extrusion 1 par rapport au sens de déplacement de l'ensemble, si bien qu'elle se positionne à la verticale du boudin 6 qui vient d'être déposé, à une hauteur suffisante pour ne jamais entrer en contact avec ce dernier.

La tête optique 2 est constituée d'un boîtier compact 8 à l'intérieur duquel sont disposées une source de lumière 9 et une caméra 10.

Dans des modes de réalisation préférés de l'invention, la source de lumière 9 émet un faisceau laser lamellaire. Ce faisceau lumineux éclaire, par l'intermédiaire d'un miroir 11, le boudin 6 déposé sur le support 7 suivant un plan de projection transversal au boudin, et quasiment perpendiculaire au plan du support encollé. Le faisceau forme une trace sur le boudin 6.

La lumière réfléchie par le boudin 6 est déviée par un miroir 12 et captée par la caméra 10. La caméra 10 observe ainsi la trace formée par le faisceau de lumière sur le boudin 6, suivant un plan d'observation transversal au boudin et incliné par rapport au plan d'éclairage.

L'angle α formé entre le plan d'incidence de la lumière sur le boudin 6 et le plan d'observation par la caméra 10 est tel qu'il permet d'obtenir une image du boudin 6. Il est avantageusement supérieur à 30 degrés. Des contraintes matérielles liées à la disposition mécanique des pièces, principalement au fait que la source de lumière 9 et la caméra 10 sont placées dans le même boîtier compact 8, imposent que l'angle α soit en outre inférieur à 60 degrés.

Le réglage de l'inclinaison relative du faisceau de lumière émis et du plan d'observation de la caméra 10 peut avantageusement être réalisé en usine, avant la livraison du dispositif de contrôle optique, en fonction des paramètres spécifiques à l'utilisation. La tête optique 2 est ainsi livrée prête à l'emploi.

Les images obtenues en chaque point du boudin 6 sont analysées et traitées afin de déterminer le profil du boudin 6, plus particulièrement sa hauteur et sa surface en section transversale. On peut noter que la section transversale du boudin 6 est dans l'exemple préféré décrit ici assimilée à la section droite du boudin, ce qui n'est en aucun cas restrictif de l'invention.

Le profil du boudin 6 obtenu est comparé à un profil type de référence qui a été préalablement défini en fonction des différents paramètres de l'encollage, soit par des calculs théoriques, soit par des essais expérimentaux sur des pièces échantillons. La détection de toute différence importante entre le profil déterminé pour le boudin et le profil de référence permet de déduire qu'il s'est produit un incident au cours de l'encollage. Le dispositif suivant l'invention permet avantageusement d'obtenir une précision de mesure au moins suffisante pour déceler toute différence ayant la moindre incidence sur la qualité du joint.

A titre d'exemple, pour un cordon de colle de dimensions classiques de 12 mm de haut par 10 mm de large, on fixe la fourchette de tolérance pour la hauteur à plus ou moins 2 mm par rapport à la valeur nominale de 12 mm. On considère en outre que le boudin est défectueux lorsque sa surface en section transversale en un point donné de la trajectoire est inférieure ou égale à la moitié de la surface calculée à partir des dimensions nominales citées ci-dessus. Ceci permet avantageusement de détecter la présence de toute bulle, puisque celles-ci présentent typiquement un diamètre de 5 mm.

Dans de modes de réalisation tout à fait avantageux dans la pratique industrielle, dans une application d'encollage dans laquelle la buse d'extrusion avance à une vitesse d'environ 400 mm/s, on relève un image du boudin tous les 3 mm de la trajectoire d'encollage seulement. Ceci permet de limiter le nombre d'images à traiter, tout en s'assurant largement de pouvoir détecter la présence de bulles, qui occupent chacune une longueur de boudin d'environ 5 mm.

L'observation par la caméra 10 est réalisée à une distance optimale d par rapport à l'orifice d'extrusion 5. Cette distance est la plus courte possible, afin de limiter au maximum le décalage entre le moment du dépôt du joint et celui de son observation. Ceci minimise l'effet sur les mesures d'une forme courbe de la trajectoire, et permet ainsi de s'adapter à des faibles rayons de courbure. Il est cependant nécessaire de ménager une distance d minimale, d'une part à cause des contraintes d'encombrement entre les différents éléments matériels, et d'autre part afin de s'assurer que l'on observe bien le boudin 6 qui a été déposé, et non le flux de colle en sortie de l'orifice d'extrusion 5, ou un résidu de colle fixé en sortie de la buse 1.

En liaison avec ce dernier point, il est avantageusement prévu dans le cadre de l'invention, lorsqu'on se place dans le contexte d'application préféré d'un encollage de pièces en série, de relever, avant et après l'encollage de chacune des pièces, une image à vide, c'est-à-dire une image d'un espace vide dans lequel il n'y a pas de traces de colle. Ceci permet de s'assurer qu'on ne détecte sur cette image la présence d'aucun résidu de colle resté fixé à l'orifice de dépôt 5 de la buse 1. Ainsi, lors du contrôle de l'encollage de la pièce suivante, on est sûr que c'est bien le boudin de colle extrudé 6 qu'on perçoit sur l'image. Par contre, dans le cas où un résidu de colle est resté fixé à la buse 1 , la présence de ce résidu est détectée sur l'image à vide, et un signal d'information est alors émis pour commander l'arrêt du fonctionnement en série et le nettoyage de la buse d'extrusion 1 avant qu'il ne soit procédé à l'encollage de la pièce suivante. On s'assure de cette manière que le procédé de contrôle du boudin extrudé 6 suivant l'invention reste fiable tout au long de la série d'encollage.

Le dispositif d'encollage est montré en vue de dessus sur la figure 2, pour le cas d'une portion de trajectoire rectiligne. Pour plus de clarté, le boîtier 8 et le canal 4 n'ont pas été représentés.

Comme illustré sur cette figure, le dispositif d'encollage est conçu de telle manière que la tête optique 2 observe le boudin 6 suivant un axe de vue incliné par rapport à la trajectoire d'encollage, si bien qu'elle reste toujours du même côté de cette trajectoire. En chaque point observé du boudin 6, l'axe d'observation de la caméra 10 forme ainsi un angle β avec l'axe de la trajectoire. Cet angle est avantageusement compris entre 5 et 30 degrés, de préférence égal à 20 degrés. De cette manière, on voit sur l'image un seul versant du triangle formé par le boudin 6, le même tout le long de la trajectoire d'encollage. Ceci est particulièrement avantageux du point de vue des étapes de traitement du signal. En effet, dans le cas contraire, on observerait tour à tour chacun des deux versants du boudin 6, et les calculs seraient d'autant plus compliqués. Pour le cas d'une trajectoire circulaire telle que celle appliquée pour l'encollage des pare-brise, l'observation est de préférence réalisée depuis l'extérieur de la boucle. De plus, selon la qualité de l'application de la colle, et notamment si le débit de colle est mal adapté à la vitesse du robot, on observe parfois des ondulations du cordon extrudé même dans les portions droites de la trajectoire. Si la caméra 10 était placée dans l'axe de la trajectoire de la buse 1, c'est-à-dire si l'angle β était nul, on risquerait alors que des parties du boudin 6 n'échappent à son champ de vision.

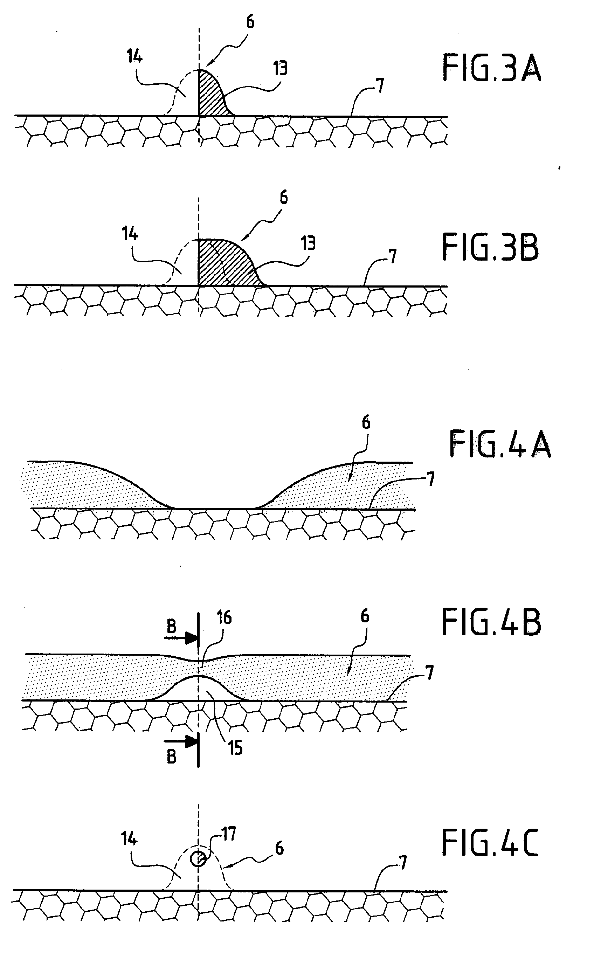

Des images du boudin 6 captées par la caméra 10 en chaque point de la trajectoire d'encollage sont représentées sur les figures 3a et 3b. Sur ces figures, la zone hachurée 13 représente la partie du boudin 6 qui est réellement vue par la caméra 10. La zone 14, délimitée par les pointillés, représente quant à elle la section réelle du boudin 6.

L'image du boudin 6 captée par la caméra 10 dépend de l'angle β. La valeur calculée de la surface en section transversale du boudin 6 dépend donc également de cet angle. Dans un mode de fonctionnement en série, elle est toutefois répétée d'une trajectoire à l'autre, et pour chaque point de la trajectoire d'encollage, elle est toujours comparable à la même valeur de référence, qui a été paramétrée en conséquence.

La figure 3a illustre le cas d'une portion en ligne droite de la trajectoire d'encollage pour l'exemple de mise en oeuvre préféré de l'invention décrit ici. L'angle β est fixe. Un seul des versants du boudin 6 est observé, et le contour de l'image de ce versant coïncide avec le profil réel du boudin.

Dans les zones courbes de la trajectoire d'encollage, en particulier dans les virages serrés, il peut y avoir une légère variation de l'angle β. En effet, la buse 1 tourne la première, et la caméra 10, qui se trouve un peu en arrière, légèrement décalée, tourne avec un temps d'avance par rapport au boudin 6 qu'elle observe. L'angle β varie alors. En conséquence, l'image du boudin 6 captée par la caméra s'étale, bien que le profil du boudin 6 soit lui-même inchangé. On capte l'image représentée sur la figure 3b : la hauteur du boudin 6 reste sensiblement la même, alors que sa surface en section transversale augmente.

Ce résultat est répété d'une trajectoire à l'autre, si bien qu'il suffit d'adapter les fourchettes de comparaison des valeurs de la surface en section transversale du boudin 6 pour tenir compte de ce phénomène. On peut également choisir d'appliquer une correction spécifique aux valeurs obtenues, et de conserver les mêmes fourchettes que pour les portions rectilignes de la trajectoire. Cette correction est choisie en fonction des différents paramètres que sont la distance d entre l'orifice d'extrusion 5 et la zone d'observation de la caméra 10, la variation de courbure de la trajectoire d'encollage et la vitesse de déplacement du robot.

Sur les figures 4a, 4b et 4c sont représentés différents profils d'un boudin 6 défectueux, par la présence d'une bulle d'air contre la surface du support 7.

La présence d'une telle bulle peut être visible, comme illustré sur la figure 4a. Dans ce cas, on observe une interruption nette du boudin 6. Sa hauteur et sa surface en section transversale varient alors toutes deux sensiblement.

On peut également être en présence d'une bulle cachée. En coupe longitudinale, comme représenté sur la figure 4b, la bulle 15 est ensevelie sous un fil plus ou moins épais de colle 16. Elle n'est pratiquement pas visible à l'oeil nu. Seule une légère diminution de la hauteur du boudin 6 peut être observée. Par contre, en coupe transversale suivant l'axe B-B, comme représenté sur la figure 4c, qui correspond à l'image du boudin 6 captée par la caméra 10, on ne détecte qu'une petite surface 17 occupée par la colle, située sur le haut de ce qui aurait dû être le profil normal du boudin 6. La surface en section transversale calculée est alors nettement inférieure à celle préconisée.

Dans tous ces cas, la survenue d'un incident est alors détectée, l'attribut défectueux est affecté à l'opération de dépôt du boudin, et un signal d'information est émis.

Dans le cas le plus simple, et le plus adéquat pour un fonctionnement industriel d'assemblage de pièces en série, le pare-brise dont l'encollage est défectueux est immédiatement éliminé de la chaîne, avant d'être (mal) fixé au véhicule et avant même que son encollage ne soit achevé.

Cependant, dans d'autres cas moins représentatifs d'un fonctionnement en série, on pourra préférer effectuer un nouvel encollage des zones défectueuses. Il est alors avantageux dans le cadre de l'invention que les moyens d'acquisition et de traitement d'image associés à la tête optique 2 soient conçus pour permettre, par des calculs en eux-mêmes classiques, la détermination des coordonnées de localisation de chacun des points observés du boudin 6, et notamment de ses zones à défaut. De cette manière, on peut connaître sur la trajectoire d'encollage la position des zones défectueuses.

Dans des modes de réalisation préférés de l'invention, le dispositif d'encollage, plus particulièrement les moyens de traitement d'image associés à la tête optique 2, sont connectés au système de commande automatique du robot. L'information qu'un incident a été détecté et éventuellement les coordonnées de position de la zone défectueuse, est alors transmise à ce système, qui commande au robot soit d'interrompre sa tâche pour passer au plus tôt à l'encollage d'une nouvelle pièce, soit d'effectuer un nouvel encollage de la zone défectueuse. Cet encollage peut alors être réalisé dès que l'erreur a été détectée, ou en toute fin de l'opération, si le système de commande du robot est équipé d'un moyen de stockage des informations de localisation.

Dans des modes de réalisation plus simples, on prévoit l'activation d'un témoin sonore et/ou visuel adressé à un opérateur qui commandera manuellement le robot.

Il est en outre classique dans les chaînes de montage que l'encollage soit défectueux en début de trajectoire d'encollage. Il faut en effet un certain temps à la tête d'encollage 1 pour régler son débit. Le boudin déposé 6 est alors irrégulier sur toute une zone de démarrage, son épaisseur augmentant petit à petit dans cette zone. Il est avantageusement prévu dans le cadre de l'invention de repasser systématiquement sur la zone de départ. La longueur de la zone à encoller de nouveau est déterminée grâce au dispositif de contrôle suivant l'invention. Le second passage est réalisé alors que le débit de colle diminue petit à petit, afin que le boudin final 6 soit le plus régulier possible.

Cette opération est particulièrement facile dans le cas de trajectoires en boucle fermée, car alors la buse d'extrusion 2 se trouve, à la fin du premier tour, tout naturellement à la position adéquate pour démarrer cet encollage complémentaire.

Comme il a été souligné tout au long de la description qui précède, l'invention est particulièrement avantageuse pour une utilisation dans une chaîne à fonctionnement répétitif, puisqu'il suffit que les fourchettes de référence pour la vérification du profil du boudin soient établies au départ sur toute la trajectoire d'encollage, pour qu'elles soient ensuite applicables au contrôle de la qualité de l'encollage de toutes les pièces d'une même série d'assemblage.

La détermination de ces fourchettes, et des autres paramètres de fonctionnement, tels que la vitesse de déplacement du robot, le débit de colle et la pression d'extrusion, peut être réalisée par un apprentissage initial sur des pièces échantillons. Elle peut également être effectuée par des calculs théoriques, en fonction des paramètres précités et des paramètres supplémentaires que sont la forme de la trajectoire d'encollage et ses variations de courbure, les angles α et β, et la distance d. Un exemple de valeurs a été donné précédemment.

La description qui précède explique clairement comment l'invention permet d'atteindre les objectifs qu'elle s'est fixés. En particulier, elle fournit un procédé de contrôle en continu d'un boudin d'extrusion, et un dispositif d'encollage associant des moyens spécifiques à la mise en oeuvre de ce procédé et des moyens d'encollage en eux-mêmes classiques. L'invention permet ainsi de détecter les incidents pouvant survenir lors de l'encollage, et de remédier à ces incidents avant de procéder à une fixation par collage. Elle est particulièrement adaptée à un fonctionnement en série dans les chaînes de montage automatisées.

Le fait de mesurer à la fois la hauteur et la surface en section transversale du boudin permet avantageusement de détecter tous les types d'incidents pouvant subvenir, chacun d'entre eux causant la variation d'un et/ou de l'autre de ces paramètres. Par exemple, l'analyse de la surface en section transversale permet, comme il a été expliqué précédemment, de détecter la présence de bulles cachées. L'analyse de la hauteur permet quant à elle de détecter d'autres défauts, tels qu'un défaut d'épaisseur du boudin en début de trajectoire.

Il ressort néanmoins de ce qui précède que l'invention n'est pas limitée aux modes de mise en oeuvre qui ont été spécifiquement décrits et représentés sur les figures.

## Revendications

1. Procédé de contrôle d'un boudin d'extrusion (6) réalisé par dépôt sur un support (7) suivant une trajectoire déterminée, **caractérisé en ce qu'**on relève une image du profil dudit boudin (6) en chaque point de ladite trajectoire et **en ce que**, pour chacune des images ainsi relevées, on détermine les valeurs de la hauteur et de la surface dudit boudin (6) en section transversale, et pour ces deux grandeurs, on vérifie que les valeurs trouvées se situent à l'intérieur de fourchettes prédéterminées propres à chacune, et dans le cas où au moins l'une des deux valeurs ne se situe pas à l'intérieur de ladite fourchette correspondante, on affecte à l'opération de dépôt dudit boudin l'attribut défectueux.

2. Procédé selon la revendication 1, **caractérisé en ce qu'**on relève une image du profil dudit boudin (6) en éclairant ledit boudin (6) par un faisceau lumineux suivant un plan d'éclairage transversal audit boudin (6), et en observant la trace dudit faisceau sur ledit boudin (6) suivant un plan transversal audit boudin (6) incliné par rapport audit plan d'éclairage.

3. Procédé selon la revendication 1 ou 2, **caractérisé en ce qu'**on observe ledit boudin (6) suivant un axe de vue dirigé en biais vers l'axe de ladite trajectoire, ledit axe de vue formant notamment un angle (β) compris entre 10 et 30 degrés avec l'axe de ladite trajectoire.

4. Procédé selon l'une quelconque des revendications 1 à 3, **caractérisé en ce que** lesdites fourchettes sont variables en fonction des variations de courbure de ladite trajectoire.

5. Procédé selon l'une quelconque des revendications 1 à 4, **caractérisé en ce que** l'affectation de l'attribut défectueux à ladite opération de dépôt entraîne l'émission d'un signal d'information qui détermine automatiquement le déclenchement d'un moyen d'avertissement visuel et/ou sonore, et/ou la transmission d'un signal de commande d'une opération automatique associée à l'attribut défectueux.

6. Dispositif de contrôle d'un boudin d'extrusion (6) réalisé par dépôt sur un support (7) suivant une trajectoire déterminée, **caractérisé en ce qu'**il comporte :
- une tête optique (2) comportant une source de lumière (9) pour éclairer ledit boudin (6) par un faisceau de lumière suivant un plan d'éclairage transversal audit boudin (6), et des moyens optiques (10) pour observer la trace dudit faisceau sur ledit boudin (6) suivant un plan transversal audit boudin (6) incliné par rapport audit plan d'éclairage et relever le profil dudit boudin (6),
- et des moyens de traitement d'image pour calculer à partir du profil dudit boudin (6) ainsi relevé les valeurs de la hauteur et de la surface en section transversale dudit boudin (6) en chaque point de ladite trajectoire, pour comparer lesdites valeurs calculées à des fourchettes de valeurs prédéterminées propres à chacune, et, si au moins une desdites valeurs ne se situe pas à l'intérieur de ladite fourchette correspondante, pour affecter à l'opération de dépôt l'attribut défectueux.

7. Dispositif d'encollage d'un support par extrusion, **caractérisé en ce qu'**il comporte une tête d'encollage comportant une buse d'extrusion (1) pour la réalisation d'un boudin d'extrusion (6) constituant un boudin de colle, entraînée suivant une trajectoire d'encollage déterminée définissant une trajectoire de dépôt dudit boudin (6), associée à un dispositif de contrôle dudit boudin d'extrusion (6) en cours de dépôt sur ledit support suivant ladite trajectoire permettant un contrôle automatique de la qualité d'encollage à partir des données de hauteur et de surface en section transversale dudit boudin (6) déterminées au fur et à mesure du dépôt dudit boudin (6) par ledit dispositif de contrôle dudit boudin (6).

8. Dispositif d'encollage selon la revendication 7, **caractérisé en ce que** ledit dispositif de contrôle comporte des moyens pour relever une image du profil dudit boudin (6) en chaque point de ladite trajectoire d'encollage et, pour chacune des images ainsi relevées, des moyens pour déterminer les valeurs de la hauteur et de la surface dudit boudin (6) en section transversale, et pour ces deux grandeurs, vérifier que les valeurs trouvées se situent à l'intérieur de fourchettes prédéterminées propres à chacune, et dans le cas où au moins l'une des deux valeurs ne se situe pas à l'intérieur de ladite fourchette correspondante, pour affecter à l'opération de dépôt l'attribut défectueux.

9. Dispositif d'encollage selon la revendication 7 ou 8, **caractérisé en ce que** ledit dispositif de contrôle comporte :
- une tête optique (2) comportant une source de lumière (9) pour éclairer ledit boudin (6) par un faisceau de lumière suivant un plan d'éclairage transversal audit boudin (6), et des moyens optiques (10) pour observer la trace dudit faisceau sur ledit boudin (6) suivant un plan transversal audit boudin (6) incliné par rapport audit plan d'éclairage et relever le profil dudit boudin (6),
- et des moyens de traitement d'image pour calculer à partir du profil dudit boudin (6) ainsi relevé les valeurs de la hauteur et de la surface en section transversale dudit boudin (6) en chaque point de ladite trajectoire d'encollage, pour comparer lesdites valeurs calculées à des fourchettes de valeurs prédéterminées propres à chacune, et, si au moins une desdites valeurs ne se situe pas à l'intérieur de ladite fourchette correspondante, pour affecter à l'opération de dépôt l'attribut défectueux.

10. Dispositif d'encollage selon la revendication 9, **caractérisé en ce que** ladite tête optique (2) est montée sur le même support que ladite buse d'extrusion (1), juste en aval de celle-ci, ladite buse d'extrusion (1) et ladite tête optique (2) étant solidaires dans leurs mouvements, et **en ce que** ladite tête optique (2) est positionnée de façon à observer ledit boudin (6) suivant un axe de vue dirigé en biais vers l'axe de ladite trajectoire d'encollage.

11. Dispositif d'encollage selon l'une quelconque des revendications 8 à 10, **caractérisé en ce qu'**il est embarqué sur un robot d'encollage de pièces à système de commande automatique, et **en ce qu'**il comporte des moyens pour communiquer avec ledit système et pour commander, dans le cas où l'opération de dépôt dudit boudin sur une pièce est affectée de l'attribut défectueux, soit la réalisation d'un nouvel encollage des points dudit boudin (6) pour lesquels au moins une desdites valeurs n'est pas incluse dans ladite fourchette correspondante, soit l'élimination de ladite pièce.

12. Dispositif d'encollage selon la revendication 11, **caractérisé en ce qu'**il comporte des moyens pour commander, lorsque ladite trajectoire présente une forme de boucle fermée, la réalisation systématique d'un nouvel encollage d'une zone de départ de ladite trajectoire sur une longueur, déterminée suivant le procédé de contrôle selon l'une quelconque des revendications 1 à 5, pour laquelle ladite hauteur et/ou ladite surface en section transversale dudit boudin (6) ne se situent pas à l'intérieur desdites fourchettes prédéterminées.

13. Utilisation du dispositif d'encollage selon l'une quelconque des revendications 7 à 12 et du procédé de contrôle d'un boudin d'extrusion (6) selon l'une quelconque des revendications 1 à 5 pour l'encollage de pare-brise dans une chaîne de montage automatisée de véhicules automobiles.

14. Procédé d'encollage de pièces en série, **caractérisé en ce qu'**on détermine des paramètres de fonctionnement répétitif d'après les résultats de mesures effectuées sur des pièces échantillons au moyen du dispositif d'encollage selon l'une quelconque des revendications 7 à 12, suivant le procédé de contrôle d'un boudin d'extrusion (6) selon l'une quelconque des revendications 1 à 5.

15. Procédé d'encollage de pièces en série, **caractérisé en ce qu'**avant et après l'encollage de chacune desdites pièces on relève une image à vide, au moyen du dispositif d'encollage selon l'une quelconque des revendications 7 à 12 et suivant le procédé de contrôle d'un boudin d'extrusion (6) selon l'une quelconque des revendications 1 à 5, afin de s'assurer que sur ladite image on ne détecte la présence d'aucun résidu de colle.
